# EUROPEAN PATENT SPECIFICATION

(11) **EP 3 088 274 B1**
(45) Date of publication and mention of the grant of the patent: **17.06.2020**
(21) Application number: 16166955.1
(22) Date of filing: 25.04.2016
(51) Int. Cl.: B61L 23/04, B61K 9/08, G01B 11/245, G01B 11/25

(54) **VIDEO DETAIL IMAGE OF THE TRACK GEOMETRY**
VIDEODETAILBILD DER GLEISLAGE
IMAGE DE DÉTAIL VIDÉO DE LA GÉOMÉTRIE DE PISTE

(30) Priority: 24.04.2015 NL 2014719; 24.04.2015 NL 2014720; 13.05.2015 NL 2014805
(43) Date of publication of application: 02.11.2016
(73) Proprietor: VolkerRail Nederland BV, 4131 NJ Vianen (NL)
(72) Inventor: Jagtenberg, Hans, 4131 NJ Vianen (NL)
(74) Representative: Assendelft, Jacobus H.W.

(56) References cited:
- EP-A1- 1 970 279
- EP-A2- 2 165 915
- WO-A1-01/86227
- WO-A1-97/11872
- DE-C1- 19 721 915
- FR-A1- 2 890 086
- US-A- 4 915 504
- US-A1- 2008 007 724
- US-A1- 2011 181 721

## Description

The quality of the track geometry of the superstructure of the, e.g. Dutch, rail network to transport persons and / or goods is measured periodically. The associated information is obtained from measurement data, which is produced using measurement trains and switch inspection vehicles for automated measuring the track geometry of the superstructure of the track. By continuing technical developments the popular remote ) monitoring, where the monitoring person (the so called analyst) at the office from a display screen, decoupled in time, does the monitoring, is continuously improved and expanded.

The by the measuring train and switch inspection vehicle obtained data should enable the railway manager to find the following defects and rail interruptions through remote monitoring:
1. missing fasteners, including type detection;
2. location of an electric isolation joint;
3. chipping;
4. cracks;
5. indentations (e.g. bullet holes);
6. slip / burned spots.

The measuring train should obtain the correct measurement data independent of different weather conditions. These weather conditions are: ambient temperatures between -20 and +40° C; rain to an intensity of 27 millimetre per hour; fog or snow with a view of at least 100 m; as long as the railway lies not in a thick layer of snow; both by night and day, free from the ) influence of light from the environment (thus a recording made at night or on a sunny day or overcast day provides the same results).

There is also made use of with a camera made video recordings that can be presented on a screen as a picture or movie of the railway or part thereof, so that on the display screen an as good as possible with the reality corresponding impression is given to the analyst. This makes demands on the by the display provided image quality both when playing as a film, as in watching individual frozen images.

The video image recording must be able to be displayed in such a way on the display that a good visual inspection is made possible. The images should be sharp. When an image is made up of the recordings of two or more cameras, the images from these cameras are to be aligned, so that the same place is displayed. The video recording must be good at all speeds up to 100 kilometre per hour for the free path and to about 50 kilometre per hour on a switch and must be adapted for automated image recognition (visual edging technology), including parts recognition, damage detection, degradation recognition.

A complicating factor is the measurement train which during driving is swaying, stamping and makes rolling movements because the wheels are suspended resiliently. Mounting the instrument to the non spring suspended part of the measurement train, such as the wheel axles, avoids these movements, however, is not always possible or desirable, for example because of vibration problems are introduced. When mounting the instrument to the resilient suspended part of the measuring train, such as the car floor, there should be taken into account for instance retraction and extension of the wheel suspension, thus, for example, the distance and angle between the measuring system (such as cameras, lamps) and the to be photographed track and roadbed continuously varies.

The video detail image must also meet the following requirements: colour images of the inside of each rail, made at an angle of +/- 30 degrees and with a minimum resolution of 1,0x1,0 millimetre of the object; colour images from the outer side of each rail, made at an angle of +/- 40 degrees and with a resolution of a minimum of 1,0x1,0 millimetre of the object; image of such a surface that the overrun portion of a cross piece of an Englishman is clearly made visible in two rides.

The video overall image must also meet the following requirements: in a single image recording, the two rails of the switch, including the sleepers; the imaging should record a width at least equal to the width of a standard cross-beam (in other words a minimum of 2.6 metre); the image recording may be composed of video recordings of several cameras; the image-recording must be made from the camera position right above the rails and the cross-beam; colour or black / white images; a resolution of at least 1,0x1,0 millimetre of the object, for example a pixel size up to 0.7 millimetre.

The upper surface of the rail needs for visual inspection, a black and white or colour image displayed on a screen such that squats can be detected early, so that with a certainty of at least 95% a defect of 4.0 millimetre whose location is detected with an imprecision of 1 millimetre is determined. This is rail surface image recording.

The document EP 1 970 279 A1 discloses a camera unit for surveying a railway track with a single housing accommodating two horizontally spaced LED stripes each covering the whole unit width, transverse to the railway track, and nine matrix cameras at a straight line between the LED stripes, distributed across the unit width. The document WO 97/11872 A1 discloses a method and apparatus for monitoring track condition with two video cameras and a single light per rail and a single light between both rails.

The object of the invention is the provision of one or more of:
- A video detail image that is in compliance with the above requirements in a reliable, durable, affordable, environmentally friendly and reproducible manner;
- A video overall picture that is in compliance with the above requirements in a reliable, durable, affordable, environmentally friendly and reproducible manner;
- An image recording of the upper surface of the rail head with which the above requirements are met in a reliable, sustainable, affordable, environmentally friendly and reproducible manner.

Regarding the image recording of the upper surface of the rail head, the effect of the invention is that in the image recording the tread band is bright and clearly visible against a dark background and all other components of the superstructure of the track belong to the dark background. This effect is insensitive to train movement. This effect is achieved by the optimal combination of lighting, camera setting and mutual location of the parts.

The invention is defined by the appended claims.

To meet the object of the invention, in particular, for the video detail image, one or more of the following is proposed: a digital matrix camera (so-called area camera) or line scan camera; a camera of CMOS or CCD type; a camera with a resolution of 600x400, preferably at least 1000x1000, more preferably at least 1500x1000, for example approximately 1600x1200 (or equivalent resolution line scan); a colour camera; per rail at least or exactly two cameras, which are aligned and focused on the same recording area of the railway; per rail at least or exactly five flash lamps, each in its own housing and with mutual spacing; a lamp includes LED's in a two-dimensional pattern; a lamp contains at least five parallel-running lines (for example, with a length at least 5 or 10 or 15 cm and / or up to 30 or 40 or 50 centimetre) ; per line LED's with a large plurality, preferably at least 20 (for example, 26) LED's per 200 millimeter line length; the LED's are of SMD-type; every LED provides white or whitish blue light; at least one light hanging right above the associated rail and is preferably straight directed downwards; at least one light bulb hanging over the side associated rail, and preferably is at an angle oriented between horizontal and vertical, for example, under approximately the same angle as the associated camera; a camera has at least one or two flash lamps; shares a camera at least one light with another camera; a camera looks through the gap between at least two associated lamps, preferably lamps for a single camera; there is a control unit to control the flashing of the lamps according to a predetermined program; determined by the control unit with the one camera associated lamp(s) are on at a timing while at the same time, the with the other cameras associated lamp (s) are off and vice versa, which time is determined by the control unit; the control unit is associated with a, preferably onboard, measuring train advancement or speed detecting means, e.g. odometer; with said one camera associated lamp(s) flashes simultaneously on a time after the lamps associated with the other camera flashed, preferably after expiry of a pause period of time; lamp(s) that are common to one and other camera flashes simultaneously with the lamp(s) which are only for the one and the other camera; the flash duration for the common lamp(s) is prolonged than for the own camera-lamp(s), preferably at least 10% longer-term, wherein preferably its flashing starts with the respective camera-own lamps and preferably continues during the pause time, preferably a part of the pause time; seen in top view a lamp and two cameras are on a single line perpendicular to the longitudinal direction of the rail and / or a camera between two lamps on one line parallel to the longitudinal direction of the rail; the lamps and cameras are built-in in an upwardly and around the side substantially light-tight enclosure, downwards sufficiently open to the lamplight to shine unhindered on the track and cameras have unhindered visual recordings of the by the lamps illuminated part of the track; for the camera applies: for example, exposure time 13 microseconds = 1 pixel shift at 100 kilometre per hour, 26 microseconds = 1 pixel shift at 50 kilometre per hour, 50 microseconds = 1 pixel shift at 26 kilometre per hour (micro = one millionth); the operation for the lamps, such as flash duration, intensity, flash rate for each vehicle speed is equals the exposure time within a maximum of 2 pixels allowed shift; common flash duration which with time away from each other inward and outward light flashes and the camera's exposure time is running while associated inward or outward light flashes, which flash duration of the inward or outward light is at least equal to the maximum selectable camera exposure time; the higher the vehicle speed, the shorter the exposure time of the cameras, this is preferably combined with an increase in the with driving speed increasing gain of the camera derived image signal (the "gain"), for good image quality; free end of camera lens is on higher level than flash face, for example, at least 1 cm or 5 and / or up to 10 or 20 or 30 centimetre; focal length at least 4 and / or up to 12 millimetre, for example 6 or 8 millimetre; diaphragm range minimum F1.4 or F2 and / or more than or F22 F5.6, such as F2.8 or F4; distance lens free end to surface ballast bed at least 500 and up to 800 or 1000 millimetre, for example, approximately 600 millimetre; gain at least 10 or 15 dB and / or up to 25 or 30 dB, preferably 20 dB; flashbulb VTR2 (Manufacturer: Garda Soft); camera range at least 0.4 or 0.55 and / or up to 0.65 or 0.7 or 0.9, for example 0.6 or 0.61.

In addition to or as an alternative to one or more of the foregoing aspects , in particular for the video total image, one or more of the following is proposed: a digital matrix camera (so-area camera) or line scan camera; camera of CMOS or CCD type; or at least one or two cameras, preferably of line scan type and / or colour type; camera pixel size at least 10 or 14 micrometre (micro = one millionth); The camera hangs vertically right above a rail and / or vertically downward direction; the camera is aimed at a light element on the superstructure of the projected light rail line; the light line is continuous from the one end to the other end of a sleeper; it on a part of the superstructure, for example, rail head, and possibly rail foot, projected part of the cut line provided by a single light element and the part of the light line on one or both sides thereof by a double- lighting element; a light element allows a light line in substantially of the same length as the light element; the area of, for example, directly below or above, or in a plan view seen beside or around a camera lens contains less light elements than the field next to it; a long light bar, preferably at least 2 meters long, for example about 2.30 meters in length and / or about as long as a cross-beam; a short light bar substantially centred on the long light bar, preferably from a minimum of 0.75 meters and / or a maximum of 1.50 meters long, for example, about 1 meter long; the long and short light bar on the same level; at the side of the long light bar an additional light bar, preferably at lower or higher level, preferably at least 10 centimetre and / or a maximum of 70 centimetre higher or lower, for example, higher than the top of the long- light bar; the additional light bar having a length of at least 25% 50% shorter than that of the short light bar and / or at least 10% or 25% of the length of the short light bar, for example, a length between 10 and 30 or 50 centimeters; long and short light bar stand on a common, on the railway projected light line; the additional light bar broadens the long light bar lit area of the railway with at least 15 centimeters; the on the rail projected light line from the additional light bar is in line with and / or partially overlaps with the light-line of long light bar; the additional light bar is duplicated, preferably with a mutual spacing of at least 5 centimetre and / or a maximum of 15 or 25 centimetre, for example, equal to that between the long and short light bar, preferably with the light beams directed to a common area; the beam of the additional light bar goes for at least a part, preferably at least 25% or 50%, via a light transmissive window in the upwards and / or to the side around light-tight enclosure in which the cameras and light bars are included; the window is at an angle of between 20 and 75 degrees relative to the horizontal; the light bars contain LED's; includes a bar LED's in a one-dimensional pattern; a bar contains a minimum of 20 (example 26) LED's a 200 millimetre bar length; the LED's are SMD-type and / or power type (e.g., at least 300 or 500 mA, such as 700 mA) and / or parabolic type; Each LED provides white or whitish blue light; a bar is equipped with an off- distance from the LED's residing lens, preferably Fresnel lens; the camera is vertically or at an angle of up to 10 or 20 degrees with the vertical down and / or between the long and short light bar; the gap width between them is at least 5 centimeters and up to 15 or 25 centimeters; the free end of the lens of the camera is located (eg a maximum of 5 or 10 centimeters higher or lower) at the same level as the lens of the additional light bar and / or on a level above the level of the long light bar, preferably at least 10 or 20 centimeters higher; have the cameras up to 30% and at least 5% image overlap; the overlap area of the cameras is mutually aligned; the longitudinal direction of the light bars is perpendicular to that of the rail; the light bars extend horizontally; a, preferably, each, light bar produces a non-diverging, and / or non-converging beam of light, for example, substantially parallel light beam, for example at least 10, and / or up to 50 millimeters wide, including about 30 millimeters; the common light line having a width at least 10 and / or up to 50 millimeters, for example, about 30 millimeter (for example, in the idle state of the train); the on a common line focused light beams of bars are so mutually oriented that vertical distance variation between the rail head and light bar, for example due to compression of the spring suspension of the train wheels, a stroke for example, at least 10, and / or up to 40 centimeters, for example, approximately 20 centimeters, the common light line varies limited in width, for example about a maximum of 10 or 20 millimeters, preferably relative to the width of the light line in the resting state of the train; the light bars and cameras are in a mutually fixed position mounted, preferably fixed to the train, for example, under the wagon floor; in the area right under the camera lack the additional light bars and short light bar; a light bar is a so-called LED line light; a light bar is a linear light source; a light bar has its beam substantially vertically oriented; two light bars run in parallel to each other and / or their light beams are to the same field directed.

In addition to or as an alternative to one or more of the foregoing aspects, in particular, for the video recording of the upper surface of the rail head, one or more of the following is proposed: a digital matrix camera (so-called area camera) or line scan camera; a CMOS or CCD camera type; at least or exactly one or two cameras, preferably line scan type and / or colour type; camera pixel size at least 10 or 14 micrometre (mu = micro = one millionth); the camera hangs vertically right above a rail and / or is vertically downward directed; the camera is directed to a by a light element on the drive face or upper surface of the rail projected light line; the light line is provided by two light elements; a light element allows a light line in substantially the same length as the light element; the camera is, preferably centrally, placed between two light elements; a light element is a light bar or beam; a light bar contains LED's; includes a bar of LED's in a one-dimensional pattern; a bar contains at least 20 (e.g. 26) LED's per 200 millimetre bar length; the LED's are SMD-type and / or power type (e.g., at least 300 or 500 mA, such as about 700 mA), and / or parabolic type; each LED provides white or whitish blue light; a bar is equipped with a located at a distance from the LED's provided lens, preferably Fresnel lens; the free end of the lens (for example, wide-angle lens) of the camera depends at a level above the level of the long light bar, at preferably, at least 10 or 20 centimeters higher; the longitudinal direction of the light bars is perpendicular to that of the rail; the light bars extend horizontally; a preferably, each, light bar produces a non-diverging, and / or non-converging beam of light, for example, substantially parallel light beam; a light line is at least 10, and / or up to 50 millimeters wide, e.g. about 30 millimeters; the common light line having a width at least 10 and / or up to 50 millimeters, for example, about 30 millimeter (for example, in the idle state of the train); the common line-focused light beams of rays are so mutually oriented that vertical distance variation between the rail head and light beam, for example at compression of the spring suspension of the train wheels, a stroke for example, at least 10, and / or up to 40 centimeters, for example, approximately 20 centimeters, the common light line varies limited in width, for example about a maximum of 10 or 20 millimeters, preferably related to the width of the light line in the resting state of the train; the light beams and cameras are in a mutually fixed position mounted, preferably fixed to the train, for example, under the wagon floor; a light bar is a so-called LED line light; a light bar is a linear light source; has a light bar at approximately 30 degrees to the vertical oriented; two light bars run parallel to each other and / or their light beams are focused on the same area.

The accompanying drawings 1 to 11 show of the many versions belonging to the invention, a preferred embodiment. The drawings show:
Fig. 1 five flash lights and two area cameras above a rail;
Fig. 2 the front view of fig. 1, for both rails of a railway;
Fig. 3 the top view of fig. 2;
Fig. 4 the light-tight enclosure hanging below the measuring train, next to the bogies, arrow P indicates the direction of travel.
Fig. 5 is a side view of a lamp and camera;
Fig. 6 shows the front view of the fig. 5 unit;
Fig. 7 in side view, two lamps and a camera;
Fig. 8 the front view of the fig. 7 unit;
Fig. 9 in side view four lights and a camera;
Fig. 10 the front view of the fig. 9 unit;
Fig. 11 a time diagram.

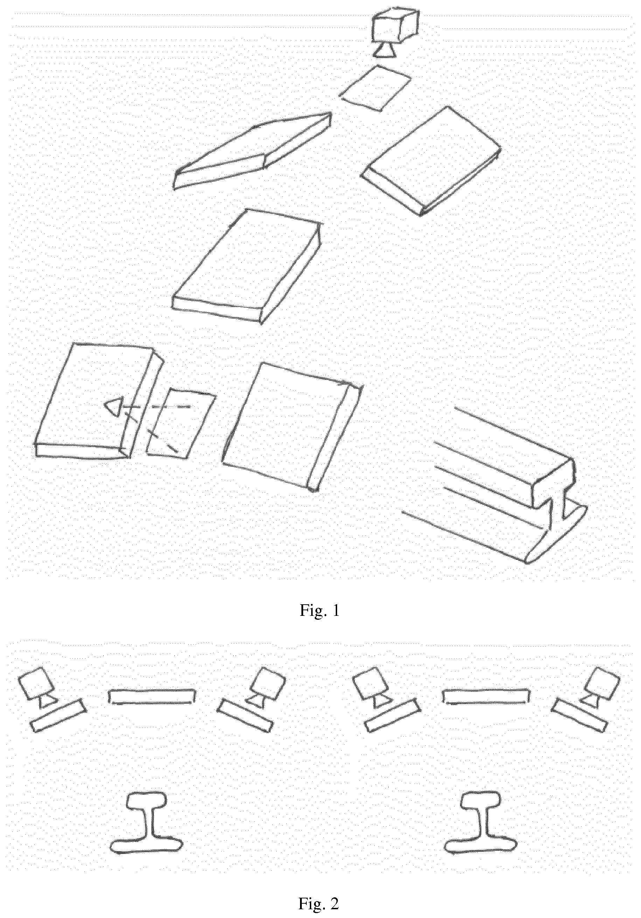

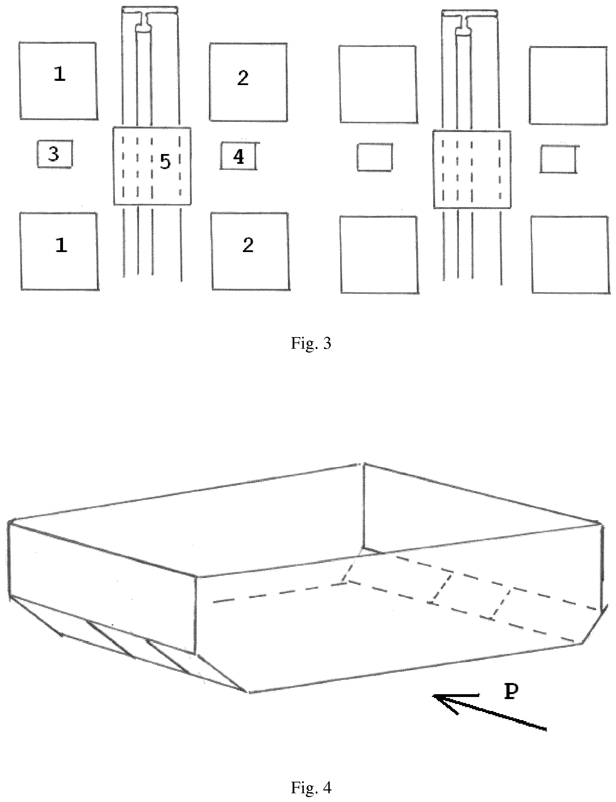

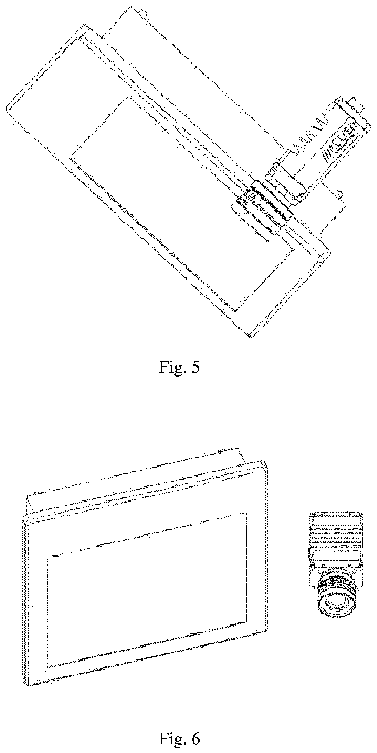

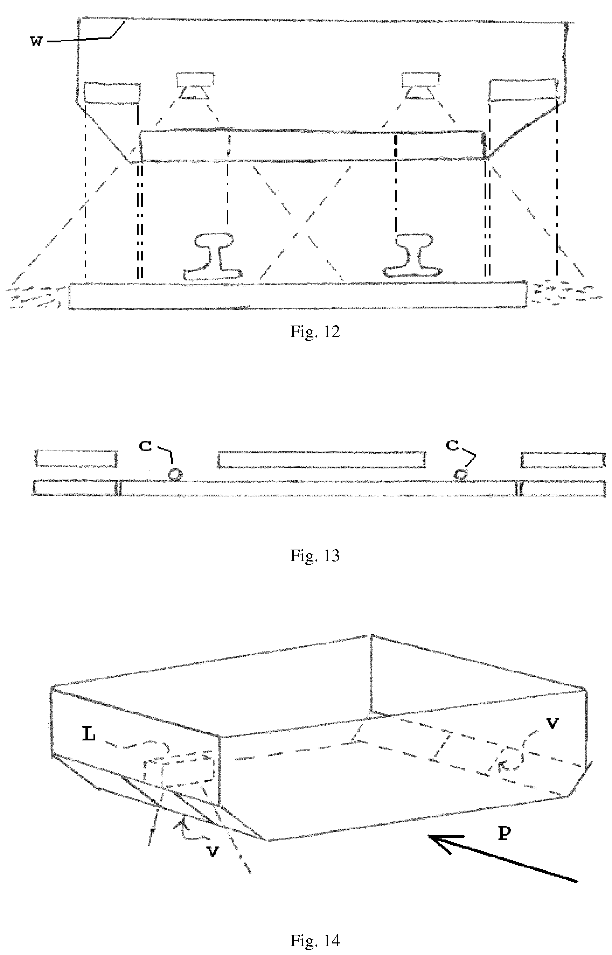

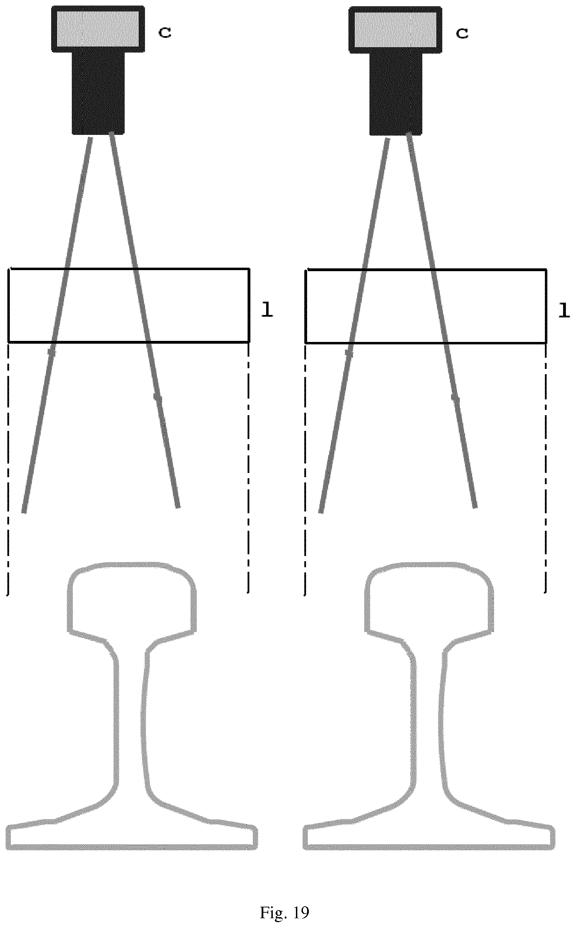

Fig. 1-11 relate to the detail image, fig. 12-17 relate to the overall picture, Fig. 19-21 relate to the surface image. Fig. 12-21 show embodiments that are outside the scope of the appended claims.

Fig. 1-3 show the outer flash lamps 1 inner flash lamps 2, central flash lamp 5, outer camera 3, inner camera 4. Flash lamps 1 and 2 are directed at the area of the track illuminated by the straight downward directed lamp 5. Lamp 5 hangs centred vertically above the associated rail.

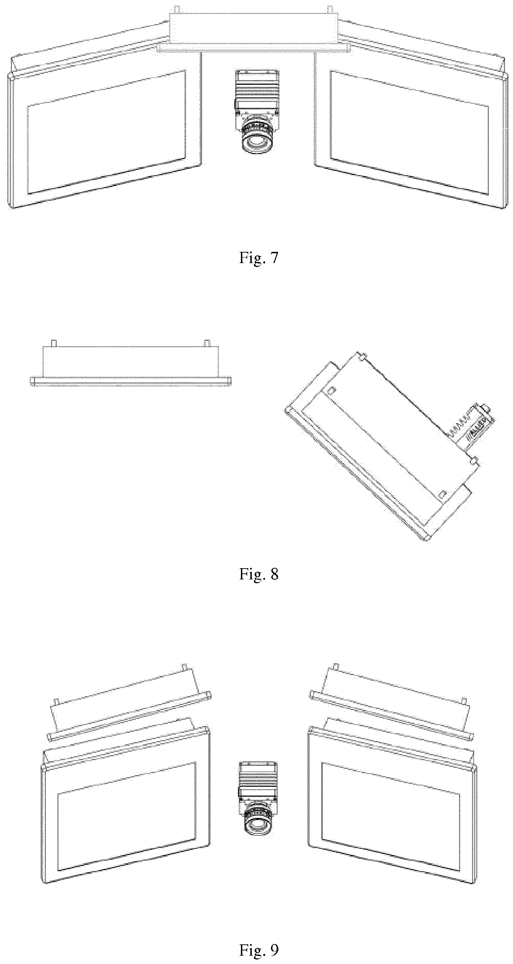

In Fig. 7, a single central lamp is hanging vertically above the associated rail and shines straight down, the camera and two additional flash lamps hanging aside the rail and are aimed at the by the central flash lamp targeted area of the railway.

In FIG. 9, two central flash lamps are suspended vertically above the associated rail and shine inclined down on a common region of the rail and its environment, the camera and two additional flash lamps are hanging to the side of the rail and are aimed at the by the central flash lamps targeted area of the railway.

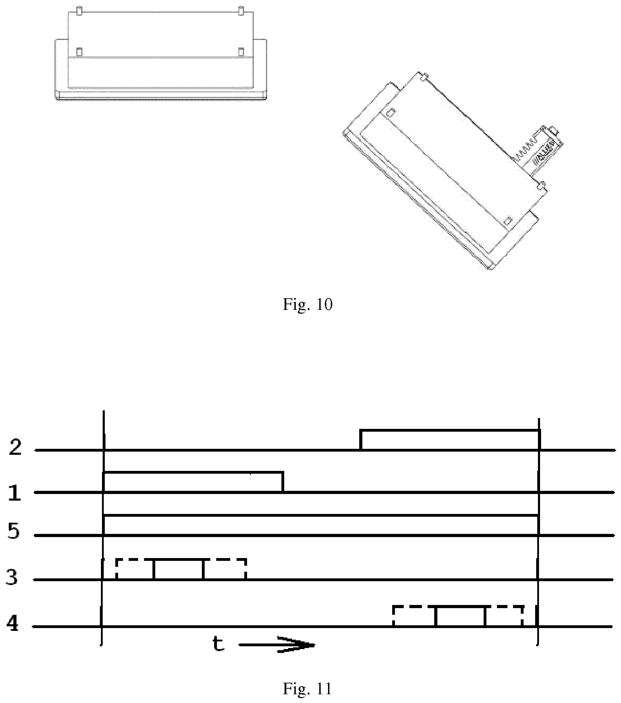

Fig. 11 shows the timing of the flashes from the flash lamps and the exposure of the cameras. The central flash lamp 5 burns 160 mu s, during which the flash lamps 1 and 2 each 70 mu s are on, the lamps 1 in the first and the lamps 2, during the second half of the duration of the flash of lamp 5. In the time that the lamps 1 or 2 provide light the exposure takes place in the associated cameras 3 and 4 the duration of which depends on the speed of the measuring train. In this example an exposure of 15 (central region as continuous line), 24 (left-hand dotted area added) or 50 mu s (left-hand and right dotted area added).

Fig. 12 shows a front view of the rail with at a distance above it the light-tight housing which contains the long light bar and centred at a distance behind it(thus not visible and therefore shown in broken lines), the short light bar, there above the two cameras and further aside flush with the camera's the additional light bars and also dotted the beams of the light bars and the viewing angles of the cameras.

Fig. 13 shows the top view of Fig. 12 for the light bars and cameras c. In the field of a lens is a single light bar, located on either side thereof two light bars.

Fig. 14 shows the light-tight enclosure with dotted an additional light bar L whose light beam goes through a light transmissive window v. The direction of travel is indicated by arrow P.

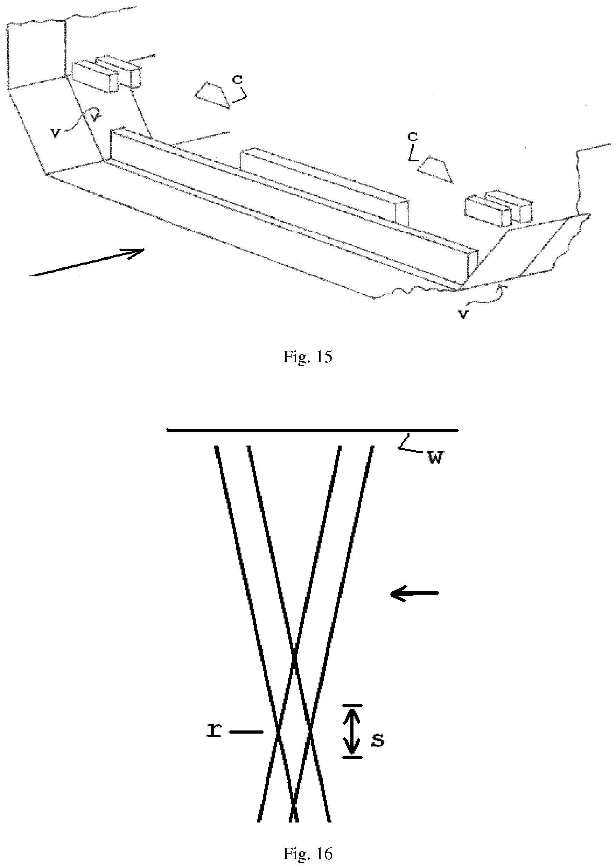

Fig. 15 shows the light bars, and cameras mounted in the housing, looking from above into the housing. Clearly shown is that the additional light bars are double.

Fig. 16 shows the two of the parallel-running light bars emanating light beams providing a common light line projected on the railway and in width varying over the stroke s due to resilient movement in and out during driving of the measuring train. At rest of the train the line width projected on the railway is max(r level at half stroke s at which position r represents, for example the top of the ballast bed), at movement in and out of the suspension the car bottom w moves closer respectively further from level r. The horizontal arrow shows the direction of travel.

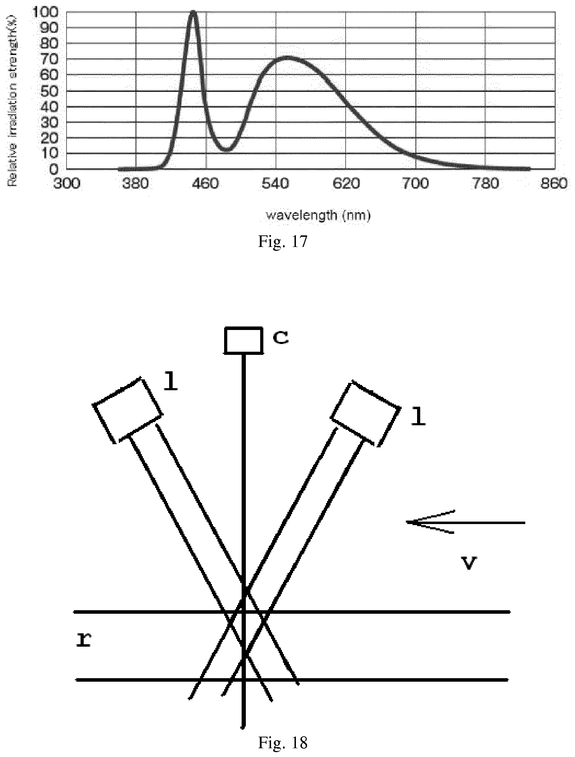

Fig. 17 shows the light spectrum of the preferred LED.

Fig. 18 shows in side view and Fig. 19 in front view the rail with at a distance above it the light-tight housing (not shown) and mounted therein per rail r two LED line lights 1 with centred at a distance between them the corresponding camera c. Of the rail r the upper surface and the rail foot are shown as indicated by two parallel horizontal lines. The measuring train moves forward according to arrow v. The line lights l illuminate the upper face over the entire width and the camera sees the entire width of this top surface.

The camera has a lens with a focal distance of 50 mm. The camera lens is 550 mm, the lens LED lights line 340 mm above the upper surface of the rail. The light sensor (one line of 1024 pixels) of the camera has pixel size 10 or 14 micrometre. Exposure time between 2 and 30 mu s. Aperture F2.8 camera. The line lights make an angle of 30 degrees to the vertical. The camera looks vertically down and is centred right above the rail.

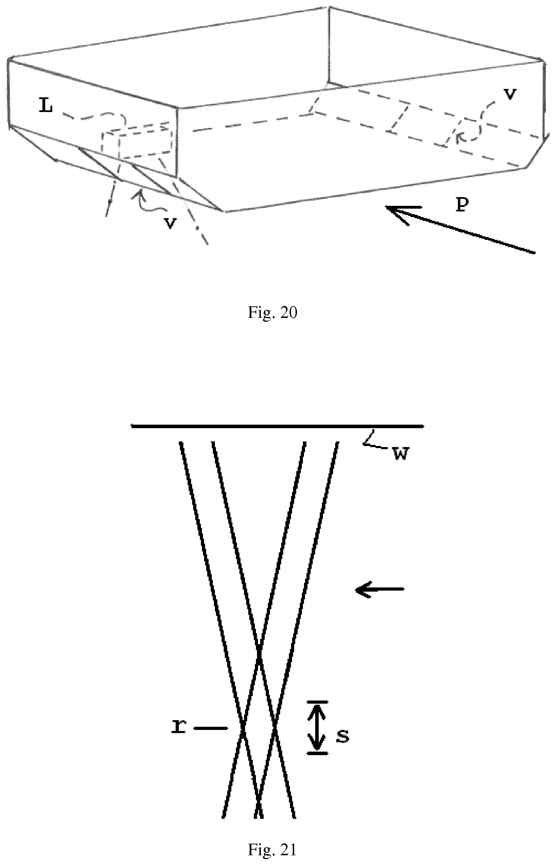

Fig. 20 shows the light-tight enclosure. The direction of travel is indicated by arrow P.

Fig. 21 shows the light beams of the two mutually parallel light lines providing a common light line which is projected onto the tread band and in width varies over the stroke s due to in and out movement of the suspension during driving of the measuring train. At rest of the train the line width projects on the rail running face maximum (r level at half stroke s), at in and out movement the wagon floor w moves closer to respectively further away from level r. The horizontal arrow shows the direction of travel.

The invention includes many different versions. A feature forms, individually or in combination with other features as disclosed herein, the invention, optionally in combination with one or more of the other features disclosed here, individually or in combination with other features.

## Claims

1. Measuring train with an optical system having means for making an image recording with a camera and a lamp, for example, video detail images, of an area of the superstructure of a railway being located right below the measuring train, and having per rail at least two cameras (3, 4) which are aligned and focused on the same recording area of the relevant rail of the railroad and **characterized by** having per rail at least five flash lamps (1, 2, 5), each in an own housing and with mutual spacing.

2. Measuring train according to claim 1, having a control unit to control the flashing of the lamps according to a predetermined program, said control unit is associated with a, preferably onboard, measuring train advancement or speed detecting means, e.g. odometer; and/or having per rail exactly two cameras which are aligned and focused on the same recording area of the relevant rail.

3. Measuring train according to claim 1 or 2, a lamp comprises LED's in a two-dimensional pattern and a lamp contains a minimum of five parallel next to each other running lines with a length at least 10 and maximum 40 cm LED's with per line at least 20 LED's for 200 millimetre line length.

4. Measuring train according to any one of claims 1-3, at least one lamp hangs right above the associated rail and is facing right down and at least one lamp is hanging to the side above the associated rail and is oriented at an angle between horizontally and vertically, at approximately the same angle as the associated camera.

5. Measuring train according to any one of claims 1-4, a camera has at least two own lamps and a camera shares at least one lamp with a different camera and a camera is looking through the gap between at least two associated lamps that are specific for the camera.

6. Measuring train according to any one of claims 1-5, there is a control unit to control the flashing of the lamps according to a predetermined program and determined by the control unit the with the one camera associated lamps are on at a control time while at the same time, the with the other cameras associated lamps are off, and vice versa, which time is determined by the control unit, wherein the with the one camera associated lamps flash simultaneously at a time after the lamps associated with the other camera have stopped flashing, after expiry of a pause-time and the lamps that are common to the one and the other camera flash simultaneously with the lamps which are private for the one respectively, the other camera.

7. Measuring train according to any one of claims 1-6, the flash duration for the common lamps is at least 10% longer-lasting than for the camera-own lamps, wherein the flashing of it starts simultaneously with the respective camera-own lamps and continues during part of the break time.

8. Measuring train according to any one of claims 1-7, in top view, a lamp and two cameras are aligned perpendicular to the longitudinal direction of the rail and a camera between two lamps at a line parallel to the longitudinal direction of the rail.

9. Measuring train according to any one of claims 1-8, the lamps and cameras are built-in in an upwardly and around sideways substantially light-tight enclosure, downwards sufficiently open to the lamplight to shine unhindered on the track and to allow cameras unhindered visual recordings of the by the lamps illuminated part of the track.

10. Measuring train according to any one of claims 1-9, for the camera the exposure time is such that the pixel shift is substantially equal at any speed of travel and for the lamps rules that their flash duration, light intensity and flash rate for any speed of travel is substantially equal.

11. Measuring train according to any one of claims 1-10, with a common flash duration within which with time spacing after each other the inner and outer lamp and the camera exposure time is running while the associated inner or outer lamp flashes, wherein the flash duration of the inner or outer lamp is at least equal to the maximum selectable camera exposure time.

12. Measuring train according to any one of claims 1-11, the higher the vehicle speed, the shorter the exposure time of the cameras, combined with a with an increase in vehicle speed increasing amplification of the by the camera provided image signal.

13. Measuring train according to any one of claims 1-12, the free end of the camera lens is located at higher level than the front face of the associated flash lamp, namely, a minimum of 5 cm and a maximum of 20 cm and the distance of the free end of the lens to the surface of the roadbed is at least 500 and up to 1000 mm.

14. Measuring train according to any one of claims 1-13, for the camera a focal length at least 4 and maximum 12 mm, aperture range F5.6 maximum and minimum F2, gain a minimum of 10 dB and a maximum of 30 dB.

15. Measuring train according to any one of claims 1-14 with for the camera a gamma at least 0.55 and up to 0. 65 and a minimum 1500x1000 resolution and colour camera type.

## Patentansprüche

1. Messzug mit einem optischen System mit Mitteln zum Erstellen einer Bildaufzeichnung mit einer Kamera und einer Lampe, beispielsweise Videodetailbildern, eines Bereichs des Aufbaus einer Eisenbahn, der sich direkt unter dem Messzug befindet und mit mindestens zwei Kameras (3, 4) pro Schiene, die auf den gleichen Aufzeichnungsbereich der betreffenden Schiene der Eisenbahn ausgerichtet und fokussiert sind, **gekennzeichnet durch** pro Schiene mindestens fünf Blitzlampen (1, 2, 5), jeweils in einem eigenen Gehäuse und mit gegenseitigem Abstand.

2. Messzug nach Anspruch 1, es gibt eine Steuereinheit, um das Blinken der Lampen gemäß einem vorbestimmten Programm zu steuern; die Steuereinheit ist mit einem vorzugsweise an Bord befindlichen Messzugvorschub- oder Geschwindigkeitserfassungsmittel verbunden, z.B. Kilometerzähler; und/oder pro Schiene genau zwei Kameras, die auf denselben Aufnahmebereich der Eisenbahn ausgerichtet und fokussiert sind.

3. Messzug nach Anspruch 1 oder 2, eine Lampe umfasst LEDs in einem zweidimensionalen Muster und eine Lampe enthält mindestens fünf parallel nebeneinander verlaufende Linien mit einer Länge von mindestens 10 und maximal 40 cm LEDs mit mindestens pro Linie 20 LEDs für 200 Millimeter Leitungslänge.

4. Messzug nach einem der Ansprüche 1 bis 3, mindestens eine Lampe hängt direkt über der zugehörigen Schiene und zeigt recht nach unten, und mindestens eine Lampe hängt seitlich über der zugehörigen Schiene und ist in einem Winkel zwischen horizontal und vertikal ausgerichtet, ungefähr im gleichen Winkel wie die zugehörige Kamera.

5. Messzug gemäß einem der Ansprüche 1 bis 4, eine Kamera hat mindestens zwei eigene Lampen und eine Kamera teilt mindestens eine Lampe mit einer anderen Kamera und eine Kamera schaut durch die Lücke zwischen mindestens zwei zugeordneten Lampen, die spezifisch für die Kamera sind.

6. Messzug nach einem der Ansprüche 1 bis 5, es gibt eine Steuereinheit, um das Blinken der Lampen gemäß einem vorbestimmten Programm zu steuern und von der Steuereinheit bestimmt, sind die mit der einen Kamera verbundenen Lampen eingeschaltet zu einer Steuerzeit, während Gleichzeitig die mit den anderen Kameras verbundenen Lampen ausgeschaltet sind und umgekehrt, welche Zeit von der Steuereinheit bestimmt wird, wobei die mit der einen Kamera verbundenen Lampen gleichzeitig blinken zu einer Zeit, nachdem das Blinken der mit der anderen Kamera verbundenen Lampen gestoppt war nach Ablauf einer Pausenzeit und die Lampen, die der einen und der anderen Kamera gemeinsam sind, blinken gleichzeitig mit den Lampen, die für die eine bzw. die andere Kamera privat sind.

7. Messzug nach einem der Ansprüche 1 bis 6, die Blitzdauer für die gemeinsame Lampen ist mindestens 10% länger als für die kameraeigenen Lampen, wobei das Blinken gleichzeitig mit den jeweiligen kameraeigenen Lampen beginnt und sich während eines Teils der Pausenzeit fortsetzt.

8. Messzug nach einem der Ansprüche 1 bis 7, in der Draufsicht sind eine Lampe und zwei Kameras senkrecht zur Längsrichtung der Schiene und eine Kamera zwischen zwei Lampen auf einer Linie parallel zur Längsrichtung der Schiene ausgerichtet.

9. Messzug nach einem der Ansprüche 1 bis 8, die Lampen und Kameras sind in einem nach oben und seitlich im Wesentlichen lichtdichten Gehäuse eingebaut, das nach unten hin ausreichend offen für das Lampenlicht ist, um ungehindert auf dem Gleis zu leuchten und Kameras ungehindert Sichtaufnahmen des von den Lampen beleuchteten Teils der Strecke zu machen lassen.

10. Messzug nach einem der Ansprüche 1 bis 9, für die Kamera ist die Belichtungszeit so, dass die Pixelverschiebung bei jeder Fahrgeschwindigkeit im Wesentlichen gleich ist, und für die Lampen regelt, dass ihre Blitzdauer, Lichtintensität und Blitzrate für jeder Fahrgeschwindigkeit im Wesentlichen gleich ist.

11. Messzug nach einem der Ansprüche 1 bis 10, mit einer gemeinsamen Blitzdauer, innerhalb derer mit dem Zeitabstand nacheinander die innere und äußere Lampe und die Belichtungszeit der Kamera laufen, während die zugehörige innere oder äußere Lampe blinkt, wobei die Blitzdauer der inneren oder äußeren Lampe mindestens gleich der maximal wählbaren Belichtungszeit der
Kamera ist.

12. Messzug nach einem der Ansprüche 1 bis 11, je höher die Fahrzeuggeschwindigkeit, desto kürzer die Belichtungszeit der Kameras, kombiniert mit einer mit einer Erhöhung der Fahrzeuggeschwindigkeit zunehmenden Verstärkung des von der Kamera bereitgestellten Bildsignals.

13. Messzug nach einem der Ansprüche 1 bis 12, das freie Ende des Kameraobjektivs befindet sich auf einer höheren Ebene als die Vorderseite der zugehörigen Blitzlampe, nämlich mindestens 5 cm und höchstens 20 cm und dem Abstand vom freien Ende der Linse zur Oberfläche des Spurbetts beträgt mindestens 500 und bis zu 1000 mm.

14. Messzug nach einem der Ansprüche 1 bis 13, für die Kamera eine Brennweite von mindestens 4 und maximal 12 mm, ein Öffnungsbereich F5.6 Maximum und Minimum F2, eine Verstärkung von mindestens 10 dB und ein Maximum von 30 dB.

15. Messzug nach einem der Ansprüche 1 bis 14, mit einem Gamma von mindestens 0,55 und bis zu 0,65 für die Kamera und einer Auflösung von mindestens 1500 x 1000 und einem Farbkameratyp.

## Revendications

1. Train de mesure avec un système optique ayant des moyens pour effectuer un enregistrement d'image avec une caméra et une lampe, par exemple des images de détail vidéo, d'une zone de la superstructure d'une voie ferrée située juste en dessous du train de mesure, et comportant par rail au moins deux caméras alignées et focalisées sur la même zone d'enregistrement du rail concerné du chemin de fer et **caractérisé par** au moins cinq lampes flash par rail, chacune dans son propre logement et avec un espacement mutuel.

2. Train de mesure selon la revendication 1, ayant une unité de contrôle pour contrôler le clignotement des lampes selon un programme prédéterminé, l'unité de commande est associée à un moyen, de préférence embarqué, de mesure de l'avancement du train ou de moyens de détection de vitesse, par ex. odomètre; et/ou ayant par rail exactement deux caméras, qui sont alignées et focalisées sur la même zone d'enregistrement du chemin de fer.

3. Train de mesure selon la revendication 1 ou 2, une lampe comprend des LED dans un motif bidimensionnel et une lampe contient au moins cinq lignes parallèles côte à côte d'une longueur d'au moins 10 et un maximum de 40 cm de LED avec par ligne au moins 20 LED pour une longueur de ligne de 200 millimètres.

4. Train de mesure selon l'une quelconque des revendications 1 à 3, au moins une lampe est suspendue juste au-dessus du rail associé et est orientée vers le bas et au moins une lampe est suspendue sur le côté au-dessus du rail associé et est orientée selon un angle entre horizontalement et verticalement, approximativement au même angle que la caméra associée.

5. Train de mesure selon l'une quelconque des revendications 1 à 4, une caméra a au moins deux lampes propres et une caméra partage au moins une lampe avec une caméra différente et une caméra regarde à travers l'espace entre au moins deux lampes associées qui sont spécifiques à l'appareil photo.

6. Train de mesure selon l'une quelconque des revendications 1 à 5, il existe une unité de commande pour contrôler le clignotement des lampes selon un programme prédéterminé et déterminé par l'unité de commande les lampes associées à une caméra allumées à un moment de commande pendant en même temps, les lampes associées aux autres caméras sont éteintes, et vice versa, lequel moment est déterminée par l'unité de commande, dans laquelle les lampes associées à l'une des caméras clignotent simultanément à la fois après l'arrêt des lampes associées à l'autre caméra clignotant, après expiration d'un temps de pause et les lampes communes à l'un et à l'autre appareil photo clignotent simultanément avec les lampes privées respectivement pour l'un, l'autre appareil photo.

7. Train de mesure selon l'une quelconque des revendications 1 à 6, la durée du flash pour les lampes communes est au moins 10% plus longue que pour les lampes propres à l'appareil photo, dans laquelle le clignotement de celui-ci commence simultanément avec les lampes respectives propres à l'appareil photo et continue pendant une partie du temps de pause.

8. Train de mesure selon l'une quelconque des revendications 1 à 7, en vue de dessus, une lampe et deux caméras sont alignées perpendiculairement à la direction longitudinale du rail et une caméra entre deux lampes sur une ligne parallèle à la direction longitudinale du rail.

9. Train de mesure selon l'une quelconque des revendications 1 à 8, les lampes et les caméras sont intégrées dans une enceinte sensiblement étanche à la lumière vers le haut et le long des côtés, suffisamment ouverte vers le bas à la lampe pour pouvoir briller sans entraves sur la piste et permettre aux caméras de ne pas gêner visuellement des enregistrements des par les lampes illuminaient une partie de la piste.

10. Train de mesure selon l'une quelconque des revendications 1 à 9, pour la caméra, le temps d'exposition est tel que le décalage des pixels est sensiblement égal à n'importe quelle vitesse de déplacement et pour les lampes, la durée du flash, l'intensité lumineuse et la vitesse du flash pour toute vitesse de voyage est sensiblement égal.

11. Train de mesure selon l'une quelconque des revendications 1 à 10, avec une durée de flash commune au sein de laquelle, avec un espacement temporel les uns après les autres, la lampe intérieure et extérieure et le temps d'exposition de la caméra fonctionnent pendant que la lampe intérieure ou extérieure associée clignote, dans laquelle la durée du flash de la lampe intérieure ou extérieure est au moins égale au temps d'exposition maximum sélectionnable de la caméra.

12. Train de mesure selon l'une quelconque des revendications 1 à 11, plus la vitesse du véhicule est élevée, plus le temps d'exposition des caméras est court, combiné à une augmentation de la vitesse du véhicule augmentant l'amplification du signal d'image fourni par la caméra.

13. Train de mesure selon l'une quelconque des revendications 1 à 12, l'extrémité libre de l'objectif de l'appareil photo est située à un niveau supérieur à la face avant de la lampe flash associée, à savoir un minimum de 5 cm et un maximum de 20 cm et la distance de l'extrémité libre de la lentille à la surface de la plate-forme est d'au moins 500 et jusqu'à 1000 mm.

14. Train de mesure selon l'une quelconque des revendications 1-13, pour la caméra une distance focale d'au moins 4 et un maximum de 12 mm, une plage d'ouverture F5.6 maximum et un minimum F2, gagnent un minimum de 10 dB et un maximum de 30 dB.

15. Train de mesure selon l'une quelconque des revendications 1 à 14 avec pour la caméra un gamma au moins 0,55 et jusqu'à 0,65 et une résolution minimum de 1500x1000 et un type de caméra couleur.
